# EUROPÄISCHE PATENTSCHRIFT

(11) **EP 4 025 449 B1**
(45) Veröffentlichungstag und Bekanntmachung des Hinweises auf die Patenterteilung: **09.10.2024**
(21) Anmeldenummer: 20758218.0
(22) Anmeldetag: 19.08.2020
(51) Int. Cl.: B60K 35/10, B60K 35/25, B60K 35/60

(54) **BEDIENSYSTEM FÜR EIN FAHRZEUG, KRAFTFAHRZEUG MIT EINEM BEDIENSYSTEM UND VERFAHREN ZUM BETREIBEN EINES BEDIENSYSTEMS FÜR EIN FAHRZEUG**
OPERATING SYSTEM FOR A VEHICLE, MOTOR VEHICLE COMPRISING AN OPERATING SYSTEM AND METHOD FOR OPERATING AN OPERATING SYSTEM FOR A VEHICLE
SYSTÈME DE COMMANDE POUR VÉHICULE, VÉHICULE À MOTEUR COMPRENANT LEDIT SYSTÈME, ET PROCÉDÉ DE COMMANDE DE SYSTÈME DE COMMANDE POUR VÉHICULE

(30) Priorität: 02.09.2019 DE 102019213213
(43) Veröffentlichungstag der Anmeldung: 13.07.2022
(73) Patentinhaber: VOLKSWAGEN AKTIENGESELLSCHAFT, 38440 Wolfsburg (DE)
(72) Erfinder: WENGELNIK, Heino, 38442 Wolfsburg (DE); SEITZ, Gordon, 38468 Ehra-Lessien (DE); GIESERT, Anna-Lena, 38536 Seershausen (DE); BOESE, Christoph, 38302 Wolfenbüttel (DE); KIESEWETTER, Thomas, 38114 Braunschweig (DE)
(86) Internationale Anmeldenummer: PCT/EP2020/073263
(87) Internationale Veröffentlichungsnummer: WO 2021/043580

(56) Entgegenhaltungen:
- DE-A1- 102012 020 022
- DE-A1- 102015 200 010
- US-A1- 2014 070 933
- US-A1- 2014 354 568
- US-A1- 2019 152 319

## Beschreibung

Die vorliegende Erfindung betrifft ein Bediensystem für ein Fahrzeug, ein Kraftfahrzeug mit einem Bediensystem und ein Verfahren zum Betreiben eines Bediensystems für ein Fahrzeug. In Fahrzeugen, insbesondere Kraftfahrzeugen, ist eine Vielzahl von elektronischen Einrichtungen vorgesehen, deren Bedienung dem Fahrer oder einem anderen Fahrzeuginsassen ermöglicht werden muss. Zu diesen Einrichtungen gehören beispielsweise ein Navigationssystem, eine Vielzahl von Fahrerassistenzsystemen sowie Kommunikations- und Multimediaanwendungen, die zum Beispiel eine Telefonanlage und Einrichtungen zur Wiedergabe von Musik und Sprache umfassen, etwa ein Radio oder einen CD-Spieler. Beim Bedienen der vielfältigen Einrichtungen im Fahrzeug kommt es wesentlich darauf an, dass Bedienelemente für den Nutzer, das heißt beispielsweise den Fahrer des Fahrzeugs, leicht erreichbar und bedienbar ausgebildet und angeordnet sind. Außerdem werden häufig Tasten oder Bedienelemente mit festen Funktionen oder Eingabemöglichkeiten versehen, sodass sich der Nutzer nicht zwischen verschiedenen Bedienweisen umstellen muss. In der DE 10 2010 012 239 A1 wird eine Bedienungs- und Anzeigevorrichtung vorgeschlagen, bei der ein virtuelles Bild der Bedienungseinrichtung angezeigt wird, wenn sich ein Nutzer ihr annähert, sodass die zur Verfügung stehenden Bedienmöglichkeiten sichtbar werden.

DE 10 2015 200 010 A1 beschreibt eine Anwenderschnittstelle mit einer opaken Abdeckung, deren lückenlose Oberfläche bei Annäherung einer Hand des Anwenders vordefinierte Bereiche mit beleuchteten Symbolen zum Bedienen ausbildet. Die Anwenderschnittstelle umfasst ein Bedienelement, das in Abhängigkeit von einem Bedienbarkeitszustand für eine Eingabe genutzt (aktivierter Bedienbarkeitszustand) oder nicht genutzt werden kann (deaktivierter Bedienbarkeitszustand). Im deaktivierten Bedienbarkeitszustand führt ein Betätigen des Bedienelements zu keiner Bedienung der Funktionseinheit, trotz Betätigen des Anwenders kann die Funktionseinheit also nicht bedient werden.

US 2014/354568 A1 beschreibt eine Steuereinheit mit einem Feedback-Generator, welcher dem Benutzer haptisches oder akustisches Feedback gibt. Dieses ist dabei entweder proportional zu der Position und/ oder der Magnitude der vom Benutzer ausgeübten Kraft. Es erfolgt also beispielsweise eine Vibration in Abhängigkeit von der Magnitude der Kraft, die der Benutzer ausgeübt hat.

In DE 10 2012 020022 A1 wird eine Bedieneinrichtung mit einer Sensoreinrichtung zum Erfassen eines Zusammenwirkens des Nutzers mit dem Bedienelement beschrieben und einer Aktoreinrichtung zum Erzeugen einer Rückmeldung infolge des erfassten Zusammenwirkens.

Der vorliegenden Erfindung liegt die Aufgabe zugrunde, ein Bediensystem, ein Verfahren zu seinem Betrieb und ein Kraftfahrzeug mit dem Bediensystem bereitzustellen, wobei der Nutzer leicht erfassen kann, welche Bedienungsmöglichkeiten ihm zur Verfügung stehen. Erfindungsgemäß wird diese Aufgabe durch ein Bediensystem mit den Merkmalen des Anspruchs 1, ein Kraftfahrzeug mit den Merkmalen des Anspruchs 8 und ein Verfahren mit den Merkmalen des Anspruchs 9 gelöst. Vorteilhafte Ausgestaltungen und Weiterbildungen ergeben sich aus den abhängigen Ansprüchen.

Das erfindungsgemäße Bediensystem für ein Fahrzeug umfasst ein Bedienelement zum Erfassen einer Betätigung, wobei das Bedienelement einen ersten oder einen zweiten Bedienbarkeitszustand aufweist, eine Rückmeldungseinheit zum Ausgeben einer Rückmeldung und eine mit dem Bedienelement und der Rückmeldungseinheit gekoppelte Steuereinheit. Dabei ist die Steuereinheit dazu eingerichtet, den Bedienbarkeitszustand des Bedienelements zu erfassen und in Abhängigkeit von dem erfassten Bedienbarkeitszustand ein erstes oder ein zweites Steuersignal zu erzeugen und an die Rückmeldungseinheit zu übertragen. Dabei ist die Rückmeldungseinheit dazu eingerichtet, die Rückmeldung in Abhängigkeit von dem ersten oder zweiten Steuerungssignal zu erzeugen und auszugeben.

Dadurch wird einem Nutzer vorteilhafterweise deutlich und leicht erfassbar mittgeteilt, in welchem Bedienbarkeitszustand sich das betätigte Bedienelement derzeit befindet. Insbesondere umfasst das Bediensystem mehrere Bedienelemente, die verschiedene Bedienbarkeitszustände einnehmen können.

Erfindungsgemäß ist der erste Bedienbarkeitszustand des Bedienelements ein aktivierter Bedienbarkeitszustand des Bedienelements und der zweite Bedienbarkeitszustand des Bedienelements ist ein deaktivierter Bedienbarkeitszustand des Bedienelements. Dadurch kann der Nutzer vorteilhafterweise leicht erfassen, ob er durch seine Betätigung eine Bedienung vornehmen kann oder nicht.

Erfindungsgemäß wird bei einem aktivierten Bedienbarkeitszustand in Abhängigkeit von der Betätigung ein Eingabesignal erzeugt und an eine Einrichtung des Fahrzeugs übertragen, etwa an eine bedienbare Funktionseinheit. Anhand des Eingabesignals wird eine Eingabe vorgenommen, etwa eine Eingabe von Daten, eine Einstellung oder ein Aktivieren oder Deaktivieren einer Funktionalität. Bei einem deaktivierten Bedienbarkeitszustand wird erfindungsgemäß kein Eingabesignal erzeugt und/oder ein solches Signal führt nicht zu einer Bedienung oder Eingabe. Das heißt, das Betätigen des Bedienelements führt zu keiner Bedienung, insbesondere nicht zu einer Bedienung der Funktionseinheit.

Die Rückmeldung wird insbesondere unmittelbar anschließend oder bereits während der Betätigung ausgegeben, sodass der Nutzer direkt erkennen kann, in welchem Bedienbarkeitszustand sich das betätigte Bedienelement befindet. Besonders wenn zwischen einem deaktivierten und einem aktivierten Bedienbarkeitszustand unterschieden wird, kann der Nutzer so erkennen, ob derzeit eine Bedienung mittels des Bedienelements möglich ist. Das heißt, er erfasst durch die Rückmeldung besonders einfach, dass die Betätigung zu keiner Bedienung führen kann und dass eine entsprechende (gegebenenfalls fehlende) Systemreaktion nicht auf einer Fehlfunktion oder Fehlbedienung beruht. Hierdurch kann das Systemvertrauen des Nutzers verbessert werden, da er seine Bedienmöglichkeiten leicht erfassen kann.

Der Bedienbarkeitszustand des Bedienelements kann auf unterschiedliche Weisen erfasst werden. Zum Beispiel ist dem Bedienelement eine bedienbare Funktionseinheit oder eine bestimmte Funktionalität davon zugeordnet und diese kann den Bedienbarkeitszustand vorgeben, etwa in Abhängigkeit von einem aktuellen Zustand eines Steuerprogramms. Ferner kann der aktivierte Bedienbarkeitszustand erfasst werden, wenn dem Bedienelement eine mittels Betätigung bedienbare Einheit oder Funktionalität zugeordnet ist, und der deaktivierte Bedienbarkeitszustand, wenn keine Einheit durch Betätigen des Bedienelements bedienbar ist.

Alternativ oder zusätzlich können weitere Bedienbarkeitszustände unterschieden werden. Zum Beispiel kann ein dauerhaft und ein temporär deaktivierter oder aktivierter Bedienbarkeitszustand definiert sein. Dabei ist beispielsweise einem Bedienelement eine Funktionalität zugeordnet, die für das Fahrzeug dauerhaft nicht verfügbar ist, etwa weil eine entsprechende Funktionseinheit fehlt oder weil diese nicht aktiviert ist. Zum Beispiel können die Funktionseinheiten verschiedene Fahrerassistenzsysteme repräsentieren, die mittels bestimmter Bedienelemente aktiviert oder bedient werden können. Ist eine solche Funktionseinheit nicht verfügbar, etwa mangels entsprechender Sensoren, Aktoren oder Steuerungsmöglichkeiten, so ist ein entsprechendes Bedienelement funktionslos und in einem dauerhaft deaktivierten Bedienbarkeitszustand. Dagegen kann eine Funktionseinheit temporär ausgeschaltet sein, etwa in einem bestimmten Fahrzustand oder nach einer entsprechenden Eingabe des Nutzers, sodass das Bedienelement nach dem Einschalten der Funktionseinheit wieder verfügbar sein wird; es ist daher lediglich in einem temporär deaktivierten Bedienbarkeitszustand.

Bei einer weiteren Ausbildung umfasst das Bedienelement einen kapazitiven Sensor. Das Bedienelement kann dadurch vorteilhafterweise besonders gut in eine Oberfläche integriert werden. Derartige Sensoren können ferner Betätigungen mit sehr großer Präzision erfassen und mit geringem Aufwand bedient werden. Bei weiteren Beispielen können andere Sensortypen verwendet werden, etwa resistive oder Temperatursensoren sowie analoge Schalter oder Regler.

Bei einer Ausbildung mit einem kapazitiven Sensor kann das Bedienelement als Schaltfläche in einem bestimmten Erfassungsbereich innerhalb einer glatten Oberfläche ausgebildet sein, das heißt, ohne fühlbar wahrnehmbare Begrenzung des Bedienelements, wie dies etwa bei einem Tastschalter üblich ist.

Die Sensoreinheit kann ferner als eine virtuelle Einheit definiert sein, beispielsweise durch einen bestimmten Erfassungsbereich, in dem eine Betätigung erfasst werden kann, oder für eine bestimmte Bedienhandlung, wobei die Sensoreinheit dann als Einheit zum Erfassen einer Betätigung mittels der Bedienhandlung definiert ist.

Das Erfassen einer Betätigung umfasst insbesondere das Erfassen einer Information, dass eine Betätigungshandlung eines Nutzers mittels des Bedienelements durchgeführt wurde. Es kann ferner eine Information über die erfasste Betätigungshandlung umfassen, beispielsweise wann und an welcher Position die Betätigung erfolgt, welche Dauer die Betätigung hat oder welche Art der Betätigungshandlung durchgeführt wird. Beispiele solcher Betätigungshandlungen sind etwa eine Berührung, ein Antippen für kürzere oder längere Dauer, eine Wischgeste oder eine Annäherung eines Betätigungsobjekts an eine bestimmte Position des Bedienelements.

Bei einer Weiterbildung ist die Rückmeldungseinheit dazu eingerichtet, die Rückmeldung für einen Nutzer haptisch, akustisch und/oder optisch wahrnehmbar auszugeben. Sie umfasst dazu beispielsweise einen Aktuator, einen Lautsprecher oder ein Display, wobei eine solche Einheit auch für die Ausgabe von Rückmeldungen für mehrere Bedienelemente genutzt werden kann. Der Nutzer kann die Rückmeldung dadurch vorteilhafterweise besonders schnell und direkt erfassen.

Beispielsweise kann die Rückmeldung ein Lichtsignal umfassen, wobei eine Farbe, Intensität, Blinkfrequenz oder ein anderer Lichtparameter des Lichtsignals in Abhängigkeit von dem erfassten Bedienbarkeitszustand ausgebildet ist. Das Lichtsignal kann mit direktem räumlichem Bezug zu einer Position des Bedienelements erzeugt werden, insbesondere in einem Oberflächenbereich, in dem die Betätigung erfassbar ist. Das Lichtsignal kann beispielsweise mittels eines bestimmten Lichtparameters einen aktivierten oder deaktivierten Bedienbarkeitszustand signalisieren und dem Nutzer damit die Wahl des geeigneten Bedienelements erleichtern.

Bei einer Ausbildung umfasst die Rückmeldungseinheit einen piezoelektrischen Aktuator. Dadurch kann vorteilhafterweise eine Vibration besonders einfach und flexibel erzeugt werden und der Aktuator kann in verschiedene Bedienelemente leicht integriert werden. Verschiedene Arten von Vibrationssignalen können besonders einfach erzeugt werden, da lediglich der Verlauf der an das piezoelektrische Element angelegten Spannung variiert werden muss.

Bei einer weiteren Ausbildung umfasst die Rückmeldung eine Vibration, wobei eine Dauer, Frequenz, Amplitude und/oder Signalform der Vibration in Abhängigkeit von dem erfassten Bedienbarkeitszustand ausgebildet ist. Verschiedene mittels Vibration erzeugte Rückmeldungen können sich ferner in einer Signalform unterscheiden, etwa indem ein Sinus-, Dreieck- oder Rechteckverlauf ausgegeben wird. Zudem sind verschiedene Pulsabfolgen denkbar. Dem Nutzer können dadurch vorteilhafterweise verschiedene Rückmeldungen zum Unterscheiden von unterschiedlichen Bedienbarkeitszuständen ausgegeben werden. Die Rückmeldung mittels Vibration ermöglicht es ferner, bei einer Betätigung, die eine Berührung umfasst, einen direkten Bezug zwischen dem Ort der Betätigung und dem Ort der Rückmeldung herzustellen.

Eine Vibration kann insbesondere so ausgegeben werden, dass sie an der Position der Betätigung beziehungsweise des Bedienelements ausgegeben wird. Das heißt, der Nutzer nimmt die Rückmeldung an der Stelle war, an der er beispielsweise eine mit einer Berührung verbundene Betätigung vornimmt. Die Rückmeldung wird dadurch besonders deutlich und direkt mit der Betätigung des Bedienelements verknüpft. Bei weiteren Ausführungen kann die Rückmeldung, die beispielsweise eine Vibration umfasst, an einer von dem Bedienelement beziehungsweise von dem Ort der Betätigung beabstandeten Ort ausgegeben werden. Die kann etwa eine Rückmeldung sein, die mittels einer von dem Bedienelement beabstandet angeordneten Einrichtung ausgegeben wird.

Die Rückmeldung kann verschiedene Elemente umfassen und je nach dem aktuellen Bedienbarkeitszustand des Bedienelements unterschiedlich angepasst werden. Dabei können verschiedene Kombinationen verwendet werden: Die Rückmeldung kann für den ersten Bedienbarkeitszustand lediglich akustisch, visuell oder haptisch wahrnehmbar ausgebildet sein; in diesem Fall kann die für den zweiten Bedienbarkeitszustand ausgegebene Rückmeldung auf veränderte Weise ausgebildet sein oder ganz wegfallen, wobei auch ein Wechsel zwischen auf unterschiedliche Weisen wahrnehmbaren Rückmeldungen denkbar ist. Das heißt, bei dem zweiten Bedienbarkeitszustand kann die Rückmeldung wegfallen, sie kann ebenfalls auf die gleiche Weise wahrnehmbar, aber auf anders ausgebildet sein, oder sie kann auf andere Weise wahrnehmbar ausgebildet sein. Ferner kann die Rückmeldung für den ersten Bedienbarkeitszustand mittels einer Kombination verschiedener Sinne wahrnehmbar sein, etwa mit einer akustisch und einer haptisch erfassbaren Komponente; in diesem Fall kann bei der Rückmeldung für den zweiten Bedienbarkeitszustand zumindest eine der Komponenten wegfallen oder andersartig ausgebildet sein.

Bei einer Weiterbildung umfasst das Bediensystem ferner eine Annäherungserfassungseinheit zum Erfassen einer Annäherung eines Betätigungsobjekts an das Bedienelement, wobei die Steuereinheit dazu eingerichtet ist, eine Beleuchtungseinheit des Bedienelements so zu steuern, dass in Abhängigkeit von der Annäherung ein Lichtparameter der Beleuchtungseinheit des Bedienelements in Abhängigkeit von dem erfassten Bedienbarkeitszustand verändert wird. Dadurch kann dem Nutzer vorteilhafterweise bereits zu einem sehr frühen Zeitpunkt angezeigt werden, in welchem Bedienbarkeitszustand sich ein Bedienelement befindet.

Als Annäherung kann dabei ein Eintreten des Betätigungsobjekts, etwa eines Körperteils des Nutzers, in einen räumlichen Bereich um das Bedienelement verstanden werden. Der räumliche Bereich ist beispielsweise durch einen Maximalabstand von den Bedienelement definiert, etwa bis zu 5 cm, bevorzugt bis zu 3 cm. Die Annäherung kann ferner alternativ oder zusätzlich anhand einer Bewegungsrichtung des Betätigungsobjekts erfasst werden, wobei die Annäherung eine Bewegung in Richtung des Bedienelements umfasst.

Beispielsweise können inaktivierte Bedienelemente auf eine bestimmte Weise beleuchtet oder durch fehlende Beleuchtung ausgeblendet werden. Insbesondere kann auf diese Weise ein temporärer Black-Panel-Effekt erzeugt werden, bei dem zunächst alle potentiell verfügbaren Bedienelemente beleuchtet werden und daher sichtbar sind, wobei nach dem Erfassen der Annäherung die Beleuchtung der inaktivierten Bedienelemente unterbrochen wird, sodass diese für den Nutzer nicht oder weniger deutlich sichtbar sind.

Die Annäherungserfassungseinheit kann beispielsweise eine Reflektionslichtschranke umfassen, die mindestens ein Leuchtmittel zum Emittieren von elektromagnetischer Detektionsstrahlung in einen Detektionsbereich und ein Empfangselement zum Detektieren eines an dem Betätigungsobjekt gestreuten und/oder reflektierten Anteils der Detektionsstrahlung umfassen. Sie kann insbesondere so ausgebildet sein, das Betätigungsobjekt in dem Detektionsbereich anhand der Intensität der empfangenen Detektionsstrahlung zu erkennen. Die Annäherungserfassungseinheit kann ferner verschiedene Leuchtmittel für die einzelnen Detektionszonen umfassen, die jeweils elektromagnetische Detektionsstrahlung in die jeweilige Detektionszone emittieren. Des Weiteren kann eine Modulationsvorrichtung zum Modulieren der emittierten Detektionsstrahlung vorgesehen sein, so dass sich die Detektionsstrahlung, die in die einzelnen Detektionszonen emittiert wird, jeweils hinsichtlich ihrer Modulation unterscheidet. In diesem Fall kann die Annäherungserfassungseinheit auch eine Analyseeinheit umfassen, die so ausgebildet ist, dass die empfangene reflektierte und/oder gestreute Detektionsstrahlung hinsichtlich ihrer Modulation analysiert werden kann, um zu ermitteln, in welcher Detektionszone die Detektionsstrahlung an einem Betätigungsobjekt gestreut oder reflektiert wurde. Ferner können andere Detektionsprinzipien angewandt werden, insbesondere ein kapazitiver Sensor.

Bei einer Ausbildung ist das Bedienelement an einer Lenkvorrichtung des Fahrzeugs angebracht, etwa an einem Lenkrad. Das Bedienelement ist insbesondere in die Lenkvorrichtung integriert. Es ist dadurch vorteilhafterweise besonders leicht für einen Fahrer des Fahrzeugs zugänglich. Das erfindungsgemäße Bediensystem erlaubt in diesem Fall eine vereinfachte Bedienung, ohne dass der Nutzer zu viel Aufmerksamkeit auf das Bedienelement richten muss, da der Bedienbarkeitszustand anhand der Rückmeldung besonders leicht erfassbar ist.

Das erfindungsgemäße Kraftfahrzeug umfasst ein Bediensystem gemäß der obigen Beschreibung, wobei insbesondere das Bedienelement in ein Lenkrad des Fahrzeugs integriert ist. Der Nutzer, insbesondere der Fahrer des Fahrzeugs, kann dadurch vorteilhafterweise besonders einfach die gleichen Bedienelemente in verschiedenen Ausstattungsvarianten verwenden, wobei anhand der Rückmeldung die verschiedenen Bedienmöglichkeiten der Bedienelemente leicht erfassbar ausgegeben werden.

Bei dem erfindungsgemäßen Verfahren zum Betreiben eines Bediensystems für ein Fahrzeug wird mittels eines Bedienelements eine Betätigung erfasst, wobei das Bedienelement einen ersten oder einen zweiten Bedienbarkeitszustand aufweist. Mittels einer Rückmeldungseinheit wird eine Rückmeldung ausgegeben und mittels einer Steuereinheit wird der Bedienbarkeitszustand des Bedienelements erfasst sowie in Abhängigkeit von dem erfassten Bedienbarkeitszustand ein erstes oder ein zweites Steuersignal erzeugt. Dabei wird die Rückmeldung in Abhängigkeit von dem ersten oder zweiten Steuerungssignal erzeugt und ausgegeben.

Das erfindungsgemäße Verfahren ist insbesondere ausgebildet, das vorstehend beschriebene erfindungsgemäße Bediensystem zu implementieren. Das Verfahren weist somit dieselben Vorteile auf wie das erfindungsgemäße Bediensystem.

Die Erfindung wird nun anhand von Ausführungsbeispielen mit Bezug zu den Zeichnungen erläutert.
- Figur 1: zeigt ein Ausführungsbeispiel des erfindungsgemäßen Bediensystems in einem Fahrzeug,
- Figur 2: zeigt ein Ausführungsbeispiel einer Lenkvorrichtung mit dem erfindungsgemäßen Bediensystem und
- Figur 3: zeigt ein Ausführungsbeispiel des erfindungsgemäßen Verfahrens.

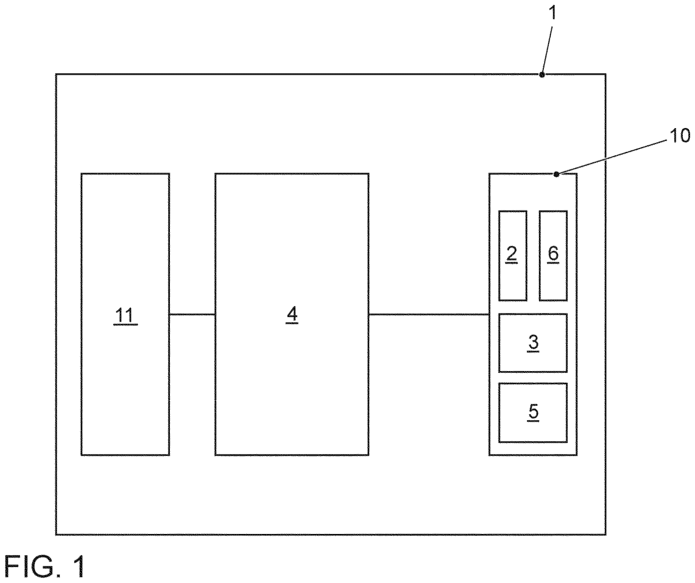

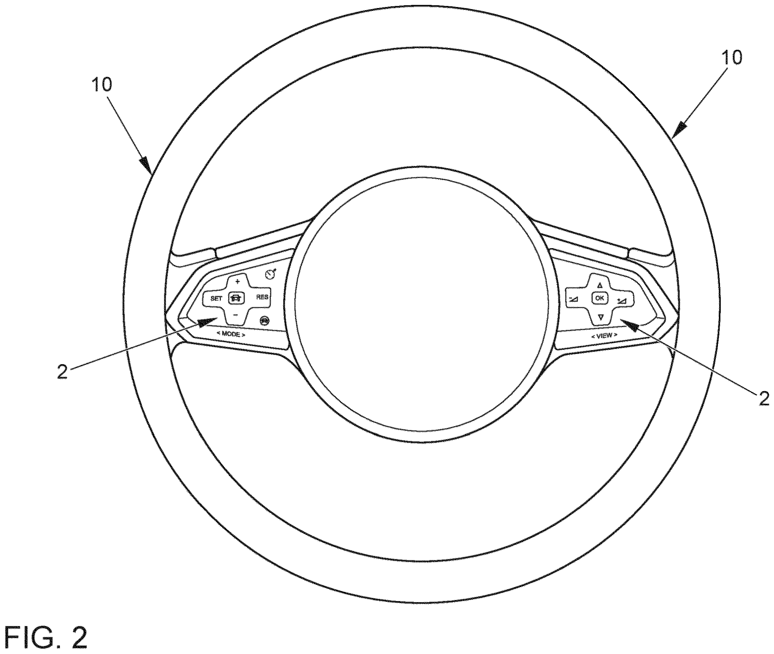

Mit Bezug zu den Figuren 1 und 2 wird ein Ausführungsbeispiel des erfindungsgemäßen Bediensystems in einem Fahrzeug erläutert.

Das Fahrzeug 1 umfasst eine Lenkvorrichtung 10, die wiederum ein Bedienelement 2, eine Rückmeldungseinheit 3, eine Annäherungserfassungseinheit 5 und eine Beleuchtungseinheit 6 umfasst. Die Lenkvorrichtung 10 ist mit einer Steuereinheit 4 gekoppelt. Mit der Steuereinheit 4 ist ferner eine Funktionseinheit 11 gekoppelt.

Bei dem Ausführungsbeispiel ist die Lenkvorrichtung 10 als Lenkrad 10 ausgebildet, in dem das Bedienelement 2 integriert ist. Das Bedienelement 2 ist auf an sich bekannte Weise ausgebildet und umfasst bei dem Ausführungsbeispiel einen kapazitiven Sensor, dem ein bestimmter Erfassungsbereich zugeordnet ist. Innerhalb dieses Erfassungsbereichs, der hier an der Oberfläche des Lenkrads 10 ausgebildet ist, wird eine Berührung mit einem Betätigungsobjekt, etwa einem Finger eines Nutzers, als Betätigung detektiert und es wird ein Betätigungssignal erzeugt und an die Steuereinheit 4 übertragen.

Bei dem Ausführungsbeispiel umfasst das Lenkrad 10, wie in Figur 2 gezeigt, eine Vielzahl separat ausgebildeter Bedienelemente 2, denen jeweils zumindest ein kapazitiver Sensor und ein Oberflächenbereich auf dem Lenkrad 10 zugeordnet ist. Diese sind auf an sich bekannte Weise rechts und links neben einem mittleren Bereich des Lenkrads 10 gruppiert und bilden kreuzförmig angeordnete Tasten sowie weitere Tasten. Bei dem Ausführungsbeispiel ist die Oberfläche des Lenkrads 10 im Bereich der Bedienelemente 2 so strukturiert, dass die Ränder der den einzelnen Bedienelementen 2 zugeordneten flächigen Erfassungsbereiche für einen Nutzer mit dem Finger fühlbar sind. Bei einem weiteren Ausführungsbeispiel sind den Bedienelementen 2 nicht jeweils eigene kapazitive Sensoren zugeordnet, sondern die für ein Bedienelement 2 definierten Erfassungsbereiche werden auf andere Weise gebildet, etwa indem die Position einer Berührung der Oberfläche mittels eines anderen Sensors detektiert und dem Erfassungsbereich eines Bedienelements 2 zugeordnet wird; die Bedienelemente 2 können in diesem Fall virtuell anhand von Teilbereichen eines größeren Erfassungsbereichs ausgebildet sein.

Bei dem Ausführungsbeispiel ist vorgesehen, dass die Bedienelemente 2 des Lenkrads 10 dauerhaft sichtbar sind, insbesondere indem Symbole auf der Oberfläche im jeweils zugeordneten Erfassungsbereich angeordnet sind, etwa aufgedruckt. Bei weiteren Beispielen sind die Bedienelemente 2 nur bei eingeschaltetem Bediensystem sichtbar, etwa nach dem Starten des Fahrzeugs 1, beispielsweise indem die Symbole durch eine Black-Panel-Technik nur dann sichtbar von der umgebenden Oberfläche unterscheidbar sind, wenn sie hinterleuchtet werden.

Bei einem weiteren Ausführungsbeispiel sind die Bedienelemente 2 auf andere Weise ausgebildet, etwa als resistive Schalter, als Tastschalter, bei denen durch Beaufschlagen mit äußerem Druck ein elektrischer Kontakt geöffnet oder geschlossen wird, als Schiebe- oder Drehregler. Ferner kann die Oberfläche im Bereich der Bedienelemente 2 auf verschiedene Weisen strukturiert oder völlig glatt ausgebildet sein.

Die Rückmeldungseinheit 3 ist ebenfalls in der Lenkvorrichtung 10 integriert und umfasst bei diesem Beispiel einen Piezo-Aktuator. Dieser reagiert auf das Anlegen einer elektrischen Spannung mit einer mechanischen Verformung so, dass eine Wechselspannung zu einer Vibration führt. Die Rückmeldungseinheit 3 ist so angeordnet, dass eine mittels des Piezo-Aktuators erzeugte Vibration mechanisch durch eine Berührung der Oberfläche des Lenkrads 10 in dem einem Bedienelement 2 zugeordneten Erfassungsbereich wahrnehmbar ist. Mittels dieser Vibration werden bei dem Ausführungsbeispiel Rückmeldungen ausgegeben. Bei weiteren Ausführungsbeispielen kann die Rückmeldungseinheit 3 alternativ oder zusätzlich eine akustisch oder optisch wahrnehmbare Rückmeldung ausgeben.

Die Annäherungserfassungseinheit 5 umfasst bei dem Beispiel einen kapazitiven Sensor, der ein Eintreten eines Betätigungsobjekts, insbesondere der Fingers des Nutzers, in einen Bereich im Umfeld eines Bedienelements 2 sowie eine Annäherung an dieses erfasst. Bei dem Ausführungsbeispiel wird eine Annäherung eines Betätigungsobjekts detektiert, wenn dessen Abstand zu dem Erfassungsbereich 5 cm, bevorzugt 3 cm, unterschreitet, und eine Betätigung wird erfasst, wenn das Betätigungsobjekt die Oberfläche im Erfassungsbereich berührt. Die Annäherung kann bei einem weiteren Ausführungsbeispiel auf andere Weise detektiert werden.

Die Beleuchtungseinheit 6 umfasst eine Leuchtdiode, die hier so ausgebildet ist, dass sie je nach Ansteuerung die Oberfläche des Lenkrads 10 im Erfassungsbereich des Bedienelements 2 mit Licht einer bestimmten Intensität und/oder Farbe beleuchtet. Sie kann ferner so angesteuert werden, dass eine dynamische Beleuchtung erzeugt wird, etwa mit einer zeitlich veränderlichen Intensität, einem Blinken oder einem Lauflicht oder einer anderen Animation, bei der sich die Lichtemission mehrerer Lichtquellen der Beleuchtungseinheit 6 oder mehrerer Beleuchtungseinheiten 6 verändern.

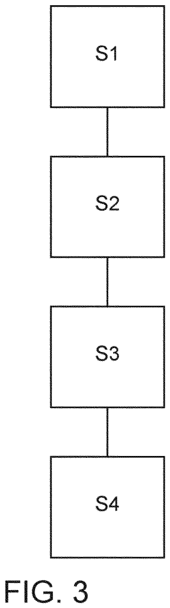

Mit Bezug zu Figur 3 wird ein Ausführungsbeispiel des erfindungsgemäßen Verfahrens erläutert. Dabei wird von dem oben erläuterten Ausführungsbeispiel ausgegangen, welches im Folgenden zudem weiter spezifiziert wird.

Bei dem Verfahren wird in einem ersten Schritt S1 eine Betätigung eines der Bedienelemente 2 erfasst, das heißt in diesem Fall eine Berührung auf der Oberfläche des Lenkrads 10 in dem zugeordneten Erfassungsbereich. Das Bedienelement 2 erzeugt ein Betätigungssignal, das nachfolgend an die Steuereinheit 4 übertragen wird. Anhand des Betätigungssignals bestimmt die Steuereinheit 4, welches Bedienelement 2 betätigt wurde.

Bei weiteren Ausführungsbeispielen wird anhand des Betätigungssignals ferner eine bestimmte Art der Betätigung bestimmt. So kann die Betätigung etwa mittels einer Tippgeste erfolgen, bei der eine bestimmte Position für eine bestimmte Zeit berührt wird, wobei beispielsweise zwischen einem kurzen (*Shortpress*) und einem langen Antippen (*Longpress*) unterschieden wird. Ferner kann eine Wischgeste erfasst werden, die eine Bewegung entlang einer Trajektorie von einer bestimmten Startposition zu einer bestimmten Endposition umfasst.

Bei dem Ausführungsbeispiel ist dem Bedienelement 2 die bedienbare Funktionseinheit 11 zugeordnet, das heißt, anhand einer Betätigung des Bedienelements 2 kann die Steuereinheit 4 ein Eingabesignal erzeugen und an die Funktionseinheit 11 übertragen, welche hierdurch bedient wird. Die Funktionseinheit 11 wird durch ein elektronisches Steuerungsprogramm gesteuert, dessen Zustand anhand des Eingabesignals im Sinne einer Bedienhandlung verändert werden kann. Bei dem Ausführungsbeispiel umfasst die Funktionseinheit 11 ein Fahrerassistenzsystem, es können aber alternativ oder zusätzlich andere Systeme und Einrichtungen, etwa ein Navigations- oder Multimediasystem, umfasst sein.

In Abhängigkeit von einem aktuellen Zustand der bedienbaren Funktionseinheit 11 beziehungsweise des sie steuernden Steuerungsprogramms kann das Bedienelement 2 aktuell für eine Eingabe genutzt werden (aktivierter Bedienbarkeitszustand) oder nicht (deaktivierter Bedienbarkeitszustand). Das heißt, im deaktivierten Bedienbarkeitszustand führt ein Betätigen des Bedienelements 2 zu keiner Bedienung der Funktionseinheit 11, die Betätigung wird also nicht als Bedienhandlung interpretiert. In einem Schritt S2 erfasst die Steuereinheit 4 den aktuellen Bedienbarkeitszustand des Bedienelements 2. Insbesondere kann die Steuereinheit 4 diese Information von der Funktionseinheit 11 empfangen oder aus einem Speicher auslesen.

In einem weiteren Schritt S3 erzeugt die Steuereinheit 4 ein Steuersignal, anhand dessen in einem Schritt S4 die Rückmeldungseinheit 6 eine Rückmeldung erzeugt und ausgibt. Bei dem Ausführungsbeispiel werden unterschiedliche Steuersignale - und entsprechend unterschiedliche Rückmeldungen - erzeugt je nachdem, welcher Bedienbarkeitszustand für das Bedienelement 2 erfasst wurde: Befindet sich das Bedienelement 2 im aktivierten Bedienbarkeitszustand, so wird eine erste Rückmeldung erzeugt, befindet es sich im deaktivierten Bedienbarkeitszustand, so wird eine davon verschiedene, zweite Rückmeldung erzeugt. Die Rückmeldung wird direkt nach dem Erfassen der Betätigung so ausgegeben, dass sie mit dem Finger des Nutzers haptisch wahrgenommen werden kann. Die Ausgabe erfolgt daher insbesondere während ein Kontakt zwischen dem Finger und der Oberfläche des Lenkrads 10 im Erfassungsbereich besteht.

Die ausgegebenen Rückmeldungen unterscheiden sich bei diesem Beispiel in der Frequenz und Dauer einer Vibration: Als Rückmeldung für das Betätigen eines Bedienelements im aktivierten Bedienbarkeitszustand wird eine verhältnismäßig kurze und hochfrequente Vibration ausgegeben, während die Vibration bei dem deaktivierten Bedienbarkeitszustand längere Zeit andauert und eine geringere Frequenz aufweist. Als weiterer Parameter können sich die Rückmeldungen in einer Amplitude oder einer Abfolge mehrerer Vibrationssignale unterscheiden.

Bei weiteren Ausführungsbeispielen kann die Rückmeldung haptisch, akustisch und/oder optisch wahrnehmbar ausgegeben werden. Eine akustisch wahrnehmbare Rückmeldung kann beispielsweise mit einer bestimmten Länge, Frequenz, Dauer, Signalabfolge oder mit einem bestimmten Informationsgehalt, insbesondere sprachlicher Information, gebildet werden, wobei sich verschiedene Rückmeldungen für verschiedene Bedienbarkeitszustände in diesen Parametern unterscheiden können. Eine optisch wahrnehmbare Rückmeldung kann etwa eine bestimmte Lichtemission der Beleuchtungseinheit 6 umfassen, etwa mit einer bestimmten Intensität, Farbe oder Verteilung, insbesondere mit einem grafischen Symbol, oder einer sich dynamisch verändernden Lichtemission. Ferner kann eine optisch wahrnehmbare Rückmeldung von dem Bedienelement 2 beabstandet ausgegeben werden, etwa mittels einer Ausgabeeinheit wie einem Display oder einer Sichtfeldanzeige; zum Beispiel kann ein Popup erzeugt werden, das auf den aktuellen Bedienbarkeitszustand hinweist, insbesondere auf den deaktivierten Bedienbarkeitszustand.

Bei weiteren Ausführungsbeispielen sind alternativ oder zusätzlich andere Bedienbarkeitszustände definiert. Beispielsweise kann danach unterschieden werden, ob ein Bedienelement 2 temporär oder dauernd in einem deaktivierten Zustand ist. So kann etwa eine bestimmte Funktionalität in dem Fahrzeug 1 dauerhaft nicht verfügbar und das entsprechende Bedienelement 2 daher ständig deaktiviert sein. Eine Funktionalität oder die Bedienung mittels des Bedienelements 2 kann ferner temporär deaktiviert sein, etwa durch eine entsprechende Eingabe eines Nutzers. In diesem Fällen können unterschiedliche Rückmeldungen beim Betätigen des Bedienelements 2 ausgegeben werden, etwa um den Nutzer darauf hinzuweisen, dass eine Bedienmöglichkeit aktuell deaktiviert ist, die gegebenenfalls durch einen Bezahldienst oder auf andere Weise aktiviert werden kann.

Bei weiteren Ausführungsbeispielen wird eine Annäherung an das Bedienelement 2 erfasst und es wird eine Rückmeldung ausgegeben, die insbesondere in Abhängigkeit von dem Bedienbarkeitszustand des Bedienelements 2 gebildet wird. Dabei besteht insbesondere die Betätigung des Bedienelements 2 in der Annäherung, das heißt, zum Betätigen muss der Finger lediglich einen bestimmten Abstand zu dem Bedienelement 2 unterschreiten.

Ferner kann die Annäherung als Betätigungsabsicht erfasst werden, das heißt, es wird davon ausgegangen, dass die Annäherung in der Absicht einer folgenden Betätigung erfolgt. Es kann in diesem Fall eine zusätzliche Rückmeldung ausgegeben werden, wobei ebenfalls zwischen verschiedenen Bedienbarkeitszuständen des Bedienelements 2 unterschieden werden kann. Bei einem Ausführungsbeispiel werden Symbole, die mittels der Beleuchtungseinheit 6 im Bereich der Bedienelements 2 angezeigt werden, ausgeblendet, wenn eine Annäherung an ein deaktiviertes Bedienelement 2 erfasst wird; in diesem Fall werden nach der Annäherung lediglich noch diejenigen Symbole angezeigt, die Bedienelementen 2 zugeordnet sind, die sich aktuell in einem aktivierten Bedienbarkeitszustand befinden. Ferner können andere Arten der Rückmeldung bei einer Annäherung ausgegeben werden, etwa eine Hervorhebung von Bedienelementen 2 in einem aktivierten Bedienbarkeitszustand.

### Bezugszeichenliste

- 1: Fahrzeug
- 2: Bedienelement
- 3: Rückmeldungseinheit
- 4: Steuereinheit
- 5: Annäherungserfassungseinheit
- 6: Beleuchtungseinheit
- 10: Lenkvorrichtung; Lenkrad
- 11: Funktionseinheit
- S1 bis S4: Schritt

## Patentansprüche

1. Bediensystem für ein Fahrzeug (1), umfassend
ein Bedienelement (2) zum Erfassen einer Betätigung; wobei
das Bedienelement (2) einen ersten oder einen zweiten Bedienbarkeitszustand aufweist;
der erste Bedienbarkeitszustand des Bedienelements (2) ein aktivierter Bedienbarkeitszustand des Bedienelements (2) ist; und
der zweite Bedienbarkeitszustand des Bedienelements (2) ein deaktivierter Bedienbarkeitszustand des Bedienelements (2) ist,
eine Rückmeldungseinheit (3) zum Ausgeben einer Rückmeldung; und
eine mit dem Bedienelement (2) und der Rückmeldungseinheit (3) gekoppelte Steuereinheit (4); wobei
die Steuereinheit (4) dazu eingerichtet ist, den Bedienbarkeitszustand des Bedienelements (2) zu erfassen und in Abhängigkeit von dem erfassten Bedienbarkeitszustand ein erstes oder ein zweites Steuersignal zu erzeugen und an die Rückmeldungseinheit (3) zu übertragen; wobei
die Rückmeldungseinheit (3) dazu eingerichtet ist, die Rückmeldung in Abhängigkeit von dem ersten oder zweiten Steuerungssignal zu erzeugen und auszugeben,
**dadurch gekennzeichnet, dass**
das Bedienelement (2) dazu eingerichtet ist, bei einem aktivierten Bedienbarkeitszustand in Abhängigkeit von der Betätigung ein Eingabesignal zu erzeugen und bei einem deaktivierten Bedienbarkeitszustand beim Betätigen des Bedienelements (2) kein Eingabesignal zu erzeugen und/ oder ein solches Eingabesignal nicht zu einer Bedienung oder Eingabe führt.

2. Bediensystem gemäß einem der vorhergehenden Ansprüche,
**dadurch gekennzeichnet, dass**
das Bedienelement (2) einen kapazitiven Sensor umfasst.

3. Bediensystem gemäß einem der vorhergehenden Ansprüche,
**dadurch gekennzeichnet, dass**
die Rückmeldungseinheit (3) dazu eingerichtet ist, die Rückmeldung für einen Nutzer haptisch, akustisch und/oder optisch wahrnehmbar auszugeben.

4. Bediensystem gemäß einem der vorhergehenden Ansprüche,
**dadurch gekennzeichnet, dass**
die Rückmeldungseinheit (3) einen piezoelektrischen Aktuator umfasst.

5. Bediensystem gemäß einem der vorhergehenden Ansprüche,
**dadurch gekennzeichnet, dass**
die Rückmeldung eine Vibration umfasst; wobei eine Dauer, Frequenz, Amplitude und/oder Signalform der Vibration in Abhängigkeit von dem erfassten Bedienbarkeitszustand ausgebildet ist.

6. Bediensystem gemäß einem der vorhergehenden Ansprüche,
**gekennzeichnet durch**
eine Annäherungserfassungseinheit (5) zum Erfassen einer Annäherung eines Betätigungsobjekts an das Bedienelement (2); wobei
die Steuereinheit (4) dazu eingerichtet ist, eine Beleuchtungseinheit (6) des Bedienelements (2) so zu steuern, dass in Abhängigkeit von der Annäherung ein Lichtparameter der Beleuchtungseinheit (6) des Bedienelements (2) in Abhängigkeit von dem erfassten Bedienbarkeitszustand verändert wird.

7. Bediensystem gemäß einem der vorhergehenden Ansprüche,
**dadurch gekennzeichnet, dass**
das Bedienelement (2) an einer Lenkvorrichtung (10) des Fahrzeugs (1) angebracht ist.

8. Kraftfahrzeug (1) mit einem Bediensystem gemäß einem der vorhergehenden Ansprüche.

9. Verfahren zum Betreiben eines Bediensystems für ein Fahrzeug (1), bei dem
mittels eines Bedienelements (2) eine Betätigung erfasst wird; wobei
das Bedienelement (2) einen ersten oder einen zweiten Bedienbarkeitszustand aufweist;
der erste Bedienbarkeitszustand des Bedienelements (2) ein aktivierter Bedienbarkeitszustand des Bedienelements (2) ist; und
der zweite Bedienbarkeitszustand des Bedienelements (2) ein deaktivierter Bedienbarkeitszustand des Bedienelements (2) ist,
mittels einer Rückmeldungseinheit (3) eine Rückmeldung ausgegeben wird; und
mittels einer Steuereinheit (4) der Bedienbarkeitszustand des Bedienelements (2) erfasst sowie in Abhängigkeit von dem erfassten Bedienbarkeitszustand ein erstes oder ein zweites Steuersignal erzeugt wird; wobei
die Rückmeldung in Abhängigkeit von dem ersten oder zweiten Steuerungssignal erzeugt und ausgegeben wird,
**dadurch gekennzeichnet, dass**
bei einem aktivierten Bedienbarkeitszustand in Abhängigkeit von der Betätigung ein Eingabesignal erzeugt wird und bei einem deaktivierten Bedienbarkeitszustand des Bedienelements (2) kein Eingabesignal erzeugt wird und/oder ein solches Signal nicht zu einer Bedienung oder Eingabe führt.

## Claims

1. Operating system for a vehicle (1), comprising
an operating element (2) for detecting an actuation; wherein
the operating element (2) has a first or a second operability state;
the first operability state of the operating element (2) is an activated operability state of the operating element (2); and
the second operability state of the operating element (2) is a deactivated operability state of the operating element (2),
a feedback unit (3) for outputting feedback; and
a control unit (4) coupled to the operating element (2) and to the feedback unit (3); wherein
the control unit (4) is configured to detect the operability state of the operating element (2) and to generate a first or a second control signal depending on the detected operability state and to transmit said control signal to the feedback unit (3); wherein
the feedback unit (3) is configured to generate and output the feedback on the basis of the first or second control signal,
**characterized in that**
the operating element (2) is configured, in the event of an activated operability state, to generate an input signal on the basis of the actuation and, in the event of a deactivated operability state, not to generate an input signal when the operating element (2) is actuated and/or such an input signal does not lead to an operation or input.

2. Operating system according to one of the preceding claims,
**characterized in that**
the operating element (2) comprises a capacitive sensor.

3. Operating system according to either of the preceding claims,
**characterized in that**
the feedback unit (3) is configured to output the feedback in a manner haptically, acoustically and/or optically perceptible to a user.

4. Operating system according to one of the preceding claims,
**characterized in that**
the feedback unit (3) comprises a piezoelectric actuator.

5. Operating system according to one of the preceding claims,
**characterized in that**
the feedback comprises a vibration; wherein a duration, frequency, amplitude and/or signal form of the vibration is configured depending on the detected operability state.

6. Operating system according to one of the preceding claims,
**characterized by**
an approach detection unit (5) for detecting the approach of an actuation object towards the operating element (2);
wherein
the control unit (4) is configured to control a lighting unit (6) of the operating element (2) such that, on the basis of the approach, a lighting parameter of the lighting unit (6) of the operating element (2) is modified depending on the detected operability state.

7. Operating system according to one of the preceding claims,
**characterized in that**
the operating element (2) is installed on a steering device (10) of the vehicle (1).

8. Motor vehicle (1) having an operating system according to one of the preceding claims.

9. Method for operating an operating system for a vehicle (1), in which
an actuation is detected by way of an operating element (2); wherein
the operating element (2) has a first or a second operability state;
the first operability state of the operating element (2) is an activated operability state of the operating element (2); and
the second operability state of the operating element (2) is a deactivated operability state of the operating element (2),
feedback is output by way of a feedback unit (3); and
the operability state of the operating element (2) is detected and a first or a second control signal is generated depending on the detected operability state by way of a control unit (4); wherein
the feedback is generated and output on the basis of the first or second control signal,
**characterized in that**
in the event of an activated operability state, an input signal is generated on the basis of the actuation and, in the event of a deactivated operability state of the operating element (2), no input signal is generated and/or such a signal does not lead to an operation or input.

## Revendications

1. Système de commande pour un véhicule (1), comprenant
un élément de commande (2) pour détecter un actionnement ; dans lequel
l'élément de commande (2) présente un premier ou un deuxième état d'opérabilité ;
le premier état d'opérabilité de l'élément de commande (2) est un état d'opérabilité activé de l'élément de commande (2) ; et
le deuxième état d'opérabilité de l'élément de commande (2) est un état d'opérabilité désactivé de l'élément de commande (2),
une unité de rétroaction (3) pour sortir une rétroaction ; et
une unité de commande (4) couplée à l'élément de commande (2) et à l'unité de rétroaction (3) ; dans lequel
l'unité de commande (4) est conçue pour détecter l'état d'opérabilité de l'élément de commande (2) et pour générer un premier ou un deuxième signal de commande en fonction de l'état d'opérabilité détecté et pour le transmettre à l'unité de rétroaction (3) ; dans lequel
l'unité de rétroaction (3) est conçue pour générer et sortir la rétroaction en fonction du premier ou du deuxième signal de commande,
**caractérisé en ce que** l'élément de commande (2) est conçu pour générer dans un état d'opérabilité activé un signal d'entrée en fonction de l'actionnement, et dans un état d'opérabilité désactivé de l'élément de commande (2), pour ne générer aucun signal d'entrée et/ou pour qu'un tel signal d'entrée n'entraîne ni commande ni entrée.

2. Système de commande selon l'une quelconque des revendications précédentes, **caractérisé en ce que** l'élément de commande (2) comprend un capteur capacitif.

3. Système de commande selon l'une quelconque des revendications précédentes, **caractérisé en ce que** l'unité de rétroaction (3) est conçue pour sortir la rétroaction pour un utilisateur de manière perceptible haptiquement, acoustiquement et/ou optiquement.

4. Système de commande selon l'une quelconque des revendications précédentes, **caractérisé en ce que** l'unité de rétroaction (3) comprend un actionneur piézoélectrique.

5. Système de commande selon l'une quelconque des revendications précédentes, **caractérisé en ce que** la rétroaction comprend une vibration ; dans lequel une durée, une fréquence, une amplitude et/ou une forme de signal de la vibration est/sont réalisée(s) en fonction de l'état d'opérabilité détecté.

6. Système de commande selon l'une quelconque des revendications précédentes, **caractérisé par**
une unité de détection d'approche (5) pour détecter un objet d'actionnement s'approchant de l'élément de commande (2) ; dans lequel
l'unité de commande (4) est conçue pour commander une unité d'éclairage (6) de l'élément de commande (2) de telle sorte qu'en fonction de l'approche, un paramètre de lumière de l'unité d'éclairage (6) de l'élément de commande (2) est modifié en fonction de l'état d'opérabilité détecté.

7. Système de commande selon l'une quelconque des revendications précédentes, **caractérisé en ce que** l'élément de commande (2) est installé sur un dispositif de direction (10) du véhicule (1).

8. Véhicule automobile (1) comprenant un système de commande selon l'une quelconque des revendications précédentes.

9. Procédé permettant de faire fonctionner un système de commande pour un véhicule (1) dans lequel un actionnement est détecté au moyen d'un élément de commande (2) ; dans lequel
l'élément de commande (2) présente un premier ou un deuxième état d'opérabilité ;
le premier état d'opérabilité de l'élément de commande (2) est un état d'opérabilité activé de l'élément de commande (2) ; et
le deuxième état d'opérabilité de l'élément de commande (2) est un état d'opérabilité désactivé de l'élément de commande (2),
une rétroaction est sortie au moyen d'une unité de rétroaction (3) ; et
l'état d'opérabilité de l'élément de commande (2) est détecté au moyen d'une unité de commande (4), et un premier ou un deuxième signal de commande est généré en fonction de l'état d'opérabilité détecté ; dans lequel
la rétroaction est générée et sortie en fonction du premier ou du deuxième signal de commande,
**caractérisé en ce que** dans un état d'opérabilité activé, un signal d'entrée est généré en fonction de l'actionnement, et dans un état d'opérabilité désactivé de l'élément de commande (2), aucun signal d'entrée n'est généré et/ou un tel signal n'entraîne ni commande ni entrée.
